# EUROPÄISCHE PATENTSCHRIFT

(11) **EP 3 978 361 B1**
(45) Veröffentlichungstag und Bekanntmachung des Hinweises auf die Patenterteilung: **28.02.2024**
(21) Anmeldenummer: 21208543.5
(22) Anmeldetag: 01.03.2019
(51) Int. Cl.: B64C 1/20

(54) **VERFAHREN ZUR HERSTELLUNG EINES BODENMODULS**
METHOD FOR MANUFACTURING A FLOOR MODULE
PROCÉDÉ DE FABRICATION D'UN MODULE DE PLANCHER

(30) Priorität: 07.03.2018 DE 102018105278; 16.04.2018 DE 102018108950
(43) Veröffentlichungstag der Anmeldung: 06.04.2022
(62) Teilanmeldung aus: 19160266.3
(73) Patentinhaber: Telair International GmbH, 83714 Miesbach (DE)
(72) Erfinder: Huber, Thomas, 83727 Schliersee (DE); Holzner, Richard, 83071 Stephanskirchen (DE)
(74) Vertreter: Meissner Bolte Partnerschaft mbB

(56) Entgegenhaltungen:
- WO-A1-2005/012085
- WO-A1-2016/150891
- DE-A1-102010 035 787
- DE-B3-102008 060 550
- US-A1- 2009 156 076
- US-A1- 2012 286 092
- US-A1- 2013 340 364
- F. C. Campbell: "Liquid Molding: You Get a Good Preform and Tool...You Get a Good Part", MANUFACTURING PROCESSES FOR ADVANCED COMPOSITES, 1. Januar 2004 (2004-01-01), XP055604790, GB ISBN: 978-1-85617-415-2 Gefunden im Internet: URL:https://pdf.sciencedirectassets.com/27 5067/3-s2.0-B9781856174152X5000X/3-s2.0-B9 781856174152500101/main.pdf?X-Amz-Security -Token=AgoJb3JpZ2luX2VjEE0aCXVzLWVhc3QtMSJ GMEQCIDxY1Cc6EMuQEMbhPiOA46ReneCQn1wUkMSnK P0edBVwAiAzmyVhEHfGa4iWXi8opf38vO0iik%2Bd4 6coiell%2BX3ITSrjAwim%2F%2F%2F%2F%2F%2F%2F %2F%2F%2F8 [gefunden am 2019-07-11]

## Beschreibung

Die Erfindung betrifft ein Verfahren zur Herstellung eines Bodenmoduls.

Ladung, die durch eine Tür in den Frachtraum eines Flugzeugs eingebracht wird, muss in diesem Frachtraum weiterbefördert und im Frachtraum gesichert werden. Der Boden eines solchen Frachtraumes, der Teil des Frachtdecks ist, ist vorzugsweise modular aufgebaut, wie dies beispielsweise aus der EP 1 646 556 B1 bekannt ist. Ein wesentliches Problem bei der Konstruktion eines solchen Frachtraumbodens besteht aus den gegensätzlichen Forderungen nach großer Stabilität und geringem Gewicht. Darüber hinaus dürfen weder die einzelnen Bauelemente noch der Einbau derselben allzu aufwendig sein, da dies die Kosten erhöht.

Weiterhin soll der Frachtraumboden wasserdicht sowie feuerfest sein und ein Eindringen von Flüssigkeit, beispielsweise in die Bilge, verhindern.

Sowohl für die Herstellung wie auch für die Montage von Frachtraumböden gilt, dass diese möglichst einfach sein soll.

Aus der US 2009/156076 A1 ist ein Verfahren zu Herstellung eines Bodenelements bekannt, das als Sandwichpaneel ausgebildet wird. Das Sandwichpaneel wird in einem einzigen Verfahrensschritt unter Verwendung von "prepregs" oder eines Harzinfusionsverfahrens hergestellt. Dabei werden Faserlagen und ein Kern miteinander verklebt.

Aus WO 2016/150891 A1 ist ein Bodenmodul für einen Flugzeugfrachtraum bekannt, wobei das Deckelelement des Bodenmoduls als einheitliches Flächenelement ausgebildet ist, welches Montagebereiche aufweist, in denen Frachthandling-Systeme montierbar sind und in denen das Deckelelement auf ein Niveau eines Bodenelementes des Bodenmoduls abgesenkt ist. Das Deckelelement umfasst Aufnahmeöffnungen für Kugelelemente. Das Deckelelement wird als Hybrid-Verbundwerkstoffteil bestehend bspw. aus Karbon- bzw. Glasfasern hergestellt. Das Deckelelement gemäß der WO 2016/150891 A1 wird als eine Art Zwischenprodukt hergestellt, wobei vor dem Einbringen der Aufnahmeöffnungen ein Aushärten stattfindet.

Der Erfindung liegt die Aufgabe zu Grunde, ein Herstellungsverfahren für ein Bodenmodul anzugeben, das einfach und hoch funktional bzw. effizient ist.

Die Aufgabe wird durch ein Herstellungsverfahren nach Anspruch 1 gelöst.

Konkret wird die Aufgabe durch ein Verfahren zur Herstellung eines Bodenmoduls für ein Frachtdeck eines Flugzeugs gelöst, das die nachfolgenden Schritte umfasst:
a) Ausschneiden von Aussparungen aus einem Kern, wobei es sich bei dem Kern um einen Schaumstoff- und/oder einen Strukturkern handelt;
b) Anordnen des Kerns zwischen ersten Faserlagen und zweiten Faserlagen, wobei die Faserlagen Kohlenstoff- und/oder Aramid- und/oder Glasfasern umfassen derart, dass die Faserlagen den Kern an den Seiten zur Bildung eines Randbereichs überragen;
c) Anordnen von Rahmenteilen in den Aussparungen zur Herstellung von Inserts, vorzugsweise zur Aufnahme von Transportkugeln;
d) Aushärten vorzugsweise unter Druck, eines aufgebrachten Kunstharzes derart, dass die Faserlagen und die Rahmenteile mit dem Kern verklebt sind.

Vorteilhafte Ausgestaltungen des erfindungsgemäßen Verfahrens sind in den abhängigen Verfahrensansprüchen definiert.

Ein Kerngedanke des erfindungsgemäßen Herstellungsverfahrens besteht darin, dass funktionelle Elemente des Frachtdecks integral in den Bodenmodulen ausgebildet werden. Im beschriebenen Herstellungsverfahren handelt es sich hierbei um Inserts vorzugsweise zur Aufnahme von Transportkugeln.

Die Temperatur für das Aushärten kann in einem Bereich von 60 bis 200°C, vorzugsweise in einem Bereich von 130 bis 150°C liegen. Vorzugsweise wird eine Temperatur von mehr als 100°C für eine Zeitdauer von 20 bis 80 Minuten, insbesondere von 25 bis 60 Minuten gehalten. Das Aushärten kann gleichzeitig unter Druck, z.B. in einer Presse, erfolgen. Vorzugsweise wird ein Druck zwischen 60 und 100 N/cm², z.B. 75 N/cm², aufgebracht.

Die Inserts können aus verschiedenen Materialien hergestellt werden. Die Inserts können bspw. aus einem Kunststoff und/oder einer Metalllegierung, beispielsweise Aluminium, hergestellt werden. Erfindungsgemäß ist es auch denkbar, auch die Inserts als Faserverbundwerkstoff oder einem Kunststoff herzustellen. Die verwendeten Faserlagen können bidirektionale oder multidirektionale Gewebe sein. Die verwendeten Fasern können Kohlenstofffasern und/oder Aramidfasern und/oder Glasfasern umfassen. Vorzugsweise handelt es sich bei den Glasfaserlagen um S2-Glasfaserlagen.

Für die Funktion der Inserts ist es wichtig, dass diese mit dem gesamten Faserverbundwerkstoff verklebt sind. Das zur Herstellung des Fahrzeugverbundwerkstoffs notwendige Kunstharz führt bei dem Herstellungsverfahren zum notwendigen Stoffschluss. Vorzugsweise werden vorimprägnierte Fasern, sogenannte "prepregs" verwendet, welche einen Harzgehalt von mehr als 40% (Massegehalt), insbesondere von mehr als 47%, haben. Der Harzgehalt kann sich im Bereich von ca. 47 - 50 % bewegen. Bei diesem Harzgehalt wird eine gute Bindung zum Kern bzw. zur Kernschicht und eine hohe Oberflächenqualität erreicht. Die Obergrenze von ca. 50 % Harzgehalt sorgt für ein vorteilhaftes Endgewicht und verhindert das Entstehen von klebrigen Oberflächen.

Der Kern kann, wie bereits erläutert, entweder aus Schaumstoff oder aus Strukturelementen hergestellt sein. Als Strukturelemente bieten sich Waben- oder andere Vieleckformen an, die im Gebiet der Herstellungsverfahren von faserverstärkten Werkstoffen bekannt sind. Rein exemplarisch wird hinsichtlich eines Beispiels für einen Strukturkern auf die bekannte Wabenstruktur verwiesen. In einer Ausführungsform wird das Bodenmodul mit deutlich stärkerem Kern ausgestattet. Dies kann beispielsweise dann notwendig sein, wenn Aufnahmen für Transportkugeln in dem Bodenmodul vorgesehen werden. Dies führt zu hohen punktuellen Lasten, die mit stärkerem Bodenmodul aufgenommen werden können. Der Kern kann in diesem Fall eine Dicke von 8 bis 30 mm, insbesondere von 10 bis 20 mm haben. Insgesamt kann sich dann eine Bodenmoduldicke von weniger als 4 cm, insbesondere von weniger als 2,5 cm, ergeben. Erfindungsgemäß können die Dickenangaben im Bereich von +/- 50 %, vorzugsweise im Bereich von +/- 30 Prozent variieren. Auch in dieser Ausführungsform kann es kernfreie Bereiche geben, die eine Dicke von weniger als 8 mm, insbesondere von weniger als 6 mm haben. Bevorzugt ist der kernfreie Bereich 3 bis 5 mm stark. Dieser kann auf Querträgern und/oder in Längsrichtung verlaufenden Profilen, z.B. U-Profilen zur Aufnahme von Rollenantriebseinheiten und/oder Riegeln, aufliegen.

Erfindungsgemäß werden aus dem Kern des Bodenmoduls Aussparungen ausgeschnitten, in die Inserts vorzugsweise zur Aufnahme von Transportkugeln eingebracht werden. Vorzugsweise haben die Aussparungen einen Durchmesser und/oder eine Seitenlänge von mindestens ca. 2 cm, insbesondere von mindestens ca. 5 cm. Entsprechende Aussparungen können eine Kreis-, eine Ellipsen- oder eine rechtwinklige Form haben. Das erfindungsgemäße Vorsehen von Aussparungen ermöglicht es, Funktionselemente teilweise innerhalb des jeweiligen Bodenmoduls vorzusehen. Die Inserts erlauben ein Austauschen dieser Funktionselemente und vermeiden, dass die Aussparungen zu einer strukturellen Schwächung des Bodenmoduls führen.

Die Aufnahme für das Kugelelement wird mittels eines abrasiven Verfahrens erfindungsgemäß durch Ausschneiden, geschaffen. Dieses Herstellungsverfahren ist effizient und kostengünstig. Zumindest eine der Transportkugeln kann drehbeweglich in einem Gehäuse gelagert werden, das sich in eines der Inserts einbringen lässt. Vorzugsweise verfügt das Gehäuse über eine Raste, so dass eine Rastverbindung zu dem Insert hergestellt werden kann. Auch aufgrund der Rastverbindung wird ein sicheres und effizientes Betreiben der Transportkugel gewährleistet.

Allgemein sei darauf hingewiesen, dass entsprechende Transportkugeln in diesem Fachbereich bekannt sind, um schwere Lasten, beispielsweise Container und/oder Frachtpaletten, auf dem Frachtdeck zu transportieren.

Es können entsprechende Transportkugeln in das Bodenmodul derart integriert werden, dass ein nachträgliches Ausrüsten des Frachtdecks mit Kugelmatten ("ball mat") oder Transportrollen unnötig ist. Hierdurch kann weiteres Gewicht eingespart werden. Das Bodenmodul selbst kann hierbei aus mehreren Einzelkomponenten aufgebaut werden und z.B. aus einem unteren Modul mit integrierten Drainagewannen und einem oberen Kugelmattenboden bestehen. Das untere und/oder das obere Modul kann in der beschriebenen Weise hergestellt werden. Eine Teilbarkeit kann hier aus Fertigungs-, Montage- wie auch Wartungsgründen sinnvoll sein, um z.B. das Reinigen der Drainagebereiche zu ermöglichen.

Auch erleichtert das Anbringen der Transportkugeln vor dem Einbau des Bodenmoduls in das Frachtdeck die Installation des Frachtdecks.

Das beschriebene Verfahren kann ein Ausschneiden von zu den Aussparungen in den Kernschichten korrespondierenden Aussparungen in mindestens einigen der Faserlagen umfassen. Das Ausschneiden kann entweder vor dem Auflegen der Faserlagen oder beim Einbringen des Inserts erfolgen.

Die beschriebenen Schritte b) bis d) können in einer Presse mit einem Presstisch und einem Pressbären bzw. Pressstempel durchgeführt werden. Vorzugsweise handelt es sich hierbei um eine beheizte Presse, so dass die Herstellung des Bodenmoduls unter Druck und Hitze erfolgt, so dass der Faserverbundwerkstoff schnell und definiert aushärtet. Optional kann die Beheizung auch im Werkzeug integriert sein.

Die Presse, insbesondere das Werkzeug, kann Positionierungshilfen umfassen, wobei zumindest einige der Rahmenteile auf der Positionierungshilfe oder diese umgebend angeordnet werden. Die Positionierhilfen sind hierbei so ausgelegt, dass sie eine gewisse Elastizität aufweisen, die es erlaubt die maßlichen Änderungen zwischen Werkzeug und Verbundmaterial, die durch die Temperaturänderungen im Laufe des Aushärtevorgangs entstehen, zu kompensieren. Damit werden sonst entstehende Spannungen zwischen Verbundbauteil und Form/Positionierhilfe beim Abkühlvorgang vermieden, die zu Beschädigungen oder zumindest einem erschwerten Entformen führen würden, was gerade bei Bauteilen mit mehreren Positionierhilfen zum Tragen kommt. Beispielsweise können die Positionierhilfen zumindest teilweise aus einem Elastomer bestehen.

Die Positionierungshilfen können scheibenförmige Elemente sein, wobei diese eine effiziente Einbringung der Rahmenteile in den Faserverbundwerkstoff gewährleisten. Es ist denkbar, an den Positionierhilfen scharfe Kanten vorzusehen, um ein Durchtrennen von Faserlagen und/oder des Kerns zu gewährleisten.

Das Herstellen mindestens eines der Inserts kann ein Einstecken von ersten Rahmenteilen von einer ersten Seite des Kerns und ein Einstecken von zweiten Rahmenteilen von einer zweiten Seite derart umfassen, dass jeweils ein erstes Rahmenteil und ein zweites Rahmenteil vorzugsweise unter Herstellung einer Rastverbindung ineinandergreifen.

In einer Ausführungsform wird das erste Rahmenteil im Formwerkzeug vorzugsweise unter Verwendung der Positionierhilfen angeordnet. Danach werden Kunstharz-durchtränkte (Prepreg) Faserlagen eingelegt. Auf die Faserlagen wird der Kern aufgelegt und oberhalb des Kerns weitere Faserlagen positioniert. Abschließend können die zweiten Rahmenteile von der anderen Seite die oberen Faserlagen durchdringend in den Kern eingebracht werden. Das abschließende Fixieren der Rahmenteile ineinander kann im Zuge des Schließens der Presse erfolgen.

Das Verfahren kann ein Einbringen von zusätzlichen Faserlagen vor dem Schritt d) derart umfassen, dass in Teilbereichen des Bodenmoduls eine lokale Erhöhung der Lagenzahl vorliegt, um so Auflage- und/oder Befestigungsbereiche und/oder lokale Verstärkungen herzustellen.

In einer Ausführungsform werden entsprechende zusätzliche Faserlagen im Randbereich des Bodenmoduls, der im Wesentlichen kernfrei ist, vorgesehen. Die zusätzlichen Faserlagen können beispielsweise zwei 0°/90° Lagen mit einer Schichtdicke von jeweils ca. 0,9 mm sein.

In einer Ausführungsform sind in zumindest einigen Teilbereichen Aussparungen im Kern vorgesehen, wobei mittels eines entsprechend ausgestalteten Werkzeugs derart Druck auf die Teilbereiche ausgeübt wird, dass die ersten und zweiten Faserlagen miteinander verklebt werden. Es ergeben sich die Vorteile, die in diesem Zusammenhang bereits hinsichtlich der Vorrichtung erläutert wurden.

Die Randbereiche können zumindest teilweise derart ausgehärtet werden, dass zumindest Abschnitte der Randbereiche gegenüber einer Auflageebene des Bodenmoduls, insbesondere spitzwinklig, geneigt sind. Die Neigung führt dazu, dass ein Ineinanderschieben von Bodenmodulen zu einem Abdichten der Module gegeneinander führt. Weiterhin ermöglicht die Neigung ein nachträgliches Ein- und Ausbauen des Bodenmoduls, das zwischen einer Vielzahl von Bodenmodulen in einer Reihe angeordnet wird. Letztendlich kann das Bodenmodul gelöst, angehoben und aus dem Bereich unterhalb des oberen Randabschnitts herausgesogen werden. In entsprechender Weise kann das Bodenmodul nachträglich in eine Reihe eingefügt werden.

Nach der Herstellung des Bodenmoduls kann mindestens ein Gehäuse mit einer Transportkugel in mindestens eines der Inserts eingerastet werden. Zusätzlich oder alternativ können Dichtbänder aufgeklebt werden. Das jeweilige Dichtband kann Unebenheiten ausgleichen. Das Dichtband kann aus Silikonband bestehen.

In einer Ausführungsform hat das Dichtband eine Dicke von ca. 1 bis 5 mm, insbesondere von ca. 2,5 mm. Das Dichtband kann eine Breite von ca. 1 bis 4 cm, vorzugsweise von ca. 2 cm, haben.

Eine entsprechende Breite und Dicke reicht aus, um eine effiziente Abdichtung der Bodenmodule gegeneinander und/oder gegenüber Elementen, auf denen diese abgestützt sind, zu bewerkstelligen.

In einer Ausführungsform wird das jeweilige Dichtband vor dem Einlegen der Bodenmodule in das Frachtdeck, insbesondere an den Bodenmodulen, vormontiert. Hierfür kann das Dichtband eine Klebeschicht umfassen, die ein Verkleben des Dichtbands mit mindestens einem der Bodenmodule insbesondere im Randbereich ermöglicht. Das Dichtband kann abschnittsweise mit einem Bodenmodul verklebt werden oder am gesamten umlaufenden Rand angebracht werden. Es ist auch möglich, Fixierpunkte an den Bodenmodulen anzubringen.

In einer Ausführungsform werden die Werkzeuge der Presse insbesondere mittels Sandstrahlung aufgeraut. Vorzugsweise erfolgt zumindest eine Aufrauhung des Werkzeugs, das die Oberseite des Bodenmoduls herstellt. Aufgrund der rauen Oberfläche des Werkzeugs ergibt sich zumindest an der Oberseite des Bodenmoduls eine raue Struktur, die ein sicheres Begehen - "Anti-Rutsch Funktion" - des Bodenmoduls ermöglicht. Das Bodenmodul hat also eine rutschfeste Abschlussschicht. Das Aufrauen kann lokal, d.h. an relevanten, z.B. begehbaren, Teilflächen, erfolgen. Vorzugsweise werden Anschlussflächen, die im installierten Zustand von oben nicht zugänglich sind, nicht mit einem aufgerauten Werkzeug hergestellt, um den Fertigungsprozess möglichst effizient zu halten.

Das Verfahren kann das Ausbilden einer Drainagewanne, beispielsweise unter Verwendung eines entsprechenden Werkzeugs umfassen. Die strukturelle Ausgestaltung der Drainagewanne kann in einem Pressschritt erfolgen, bei dem vorzugsweise gleichzeitig Wärme zum Aushärten aufgebracht wird. Das Ausbilden der Drainagewanne kann ein Einbringen von zusätzlichen Faserlagen umfassen, wie dies bereits beschrieben wurde. In dem Pressschritt können auch Drainagerinnen erstellt werden, die dazu geeignet sind Flüssigkeit auf den Bodenmodulen in die Drainagewanne abzuleiten.

Dem Ausbilden der Drainagewanne kann ein Schritt des Vorsehens einer Öffnung und/oder des Anbringens eines Auslaufs, z.B. in Form eines Abführstutzens, folgen.

In einer Ausführungsform befindet sich auf der Außenseite des Bodenmoduls eine S2-Glasfaserlage. Dies verbessert die Brandsicherheit und verhindert eine schnelle Abnutzung des jeweiligen Moduls (hohe Schlagfestigkeit).

Das Bodenmodul kann eine lokale Lagenerhöhung zur Bildung des Randbereichs und/oder eines Auflageabschnitts und/oder zur Bildung einer der Aufnahmen für ein Funktionselement, insbesondere die Transportkugeln, und/oder zur Bildung einer Drainagewanne umfassen. Die Erhöhung der Lagen führt zu einer erhöhten Stabilität in dem jeweiligen Bereich. In einer Ausführungsform umfassen die Randbereiche zusätzliche Lagen aus Kohlenstoff- und/oder Aramid- und/oder Glasfasern.

Weiterhin kann an den Stellen, an denen Aussparungen beispielsweise zur Aufnahme von Funktionselementen vorgesehen werden, die Lagenanzahl erhöht werden. Aufgrund der erhöhten Lagenzahl können entsprechende Bereiche als Fixierpunkte oder für andere Anwendungen verwendet werden. Letztendlich ist es möglich, beim Herstellen funktionelle Bereiche in den jeweiligen Bodenmodulen auszubilden, die beispielsweise als Zurrpunkte, zur Entwässerung, usw. verwendet werden. Dies führt zu einer Gewichtsreduktion und erleichtert die Installation.

Das Bodenmodul kann an mindestens einem Rand einen nach oben gewölbten und/oder schräg nach oben laufenden Abschnitt zum Abdecken des Flugzeugrumpfes aufweisen. An einem Rand nur dann, wenn das Bodenmodul im Bereich der Flugzeugtür montiert wird. Ansonsten können diese gewölbten Abschnitte an beiden Seiten eines Bodenmoduls vorgesehen werden. Dadurch ergibt sich eine weitere Vereinfachung bei der Herstellung und der Montage der Gesamtanordnung. Darüber hinaus führt der gegenüber der planen Fläche des Deckelementes gewölbte Abschnitt zu einer Versteifung der Gesamtanordnung. Allgemein aber auch bei dieser konkreten Ausbildung des Bodenmoduls können zwei Kerne nebeneinander angeordnet werden, wobei im Bereich zwischen den Kernen ein kernfreier Bereich, z.B. für die Montage an einem Längsträger vorgesehen ist, an dem die Deckschichten unter Ausbildung eines Stoffschlusses verbunden sind.

Das Bodenmodul wird vorzugsweise, wie bereits erläutert, als Hybrid-Verbundwerkstoffteil, z.B. mit Karbon- und/oder Glasfaserverstärkung ausgebildet. Damit kann eine angestrebte dreidimensionale Formgebung in einer aufheizbaren Pressform erfolgen, so dass eine besonders effiziente Herstellung des Bodenmoduls bei hoher Festigkeit und geringem Gewicht gewährleistet ist.

Nachfolgend werden mehrere Ausführungsbeispiele der Erfindung anhand von Abbildungen näher erläutert. Hierbei zeigen
- Fig. 1: eine perspektivische Ansicht zweier Bodenmodule, die zwischen zwei Längsträgern eines Flugzeugs eingelegt sind;
- Fig. 2: eine Frontansicht auf das vordere Bodenmodul zwischen den Längsträgern aus Fig. 1;
- Fig. 3: eine Draufsicht auf die Bodenmodule aus Fig. 1;
- Fig. 4: eine perspektivische Ansicht der beiden Bodenmodule und der beiden Längsträger aus Fig. 1, wobei die Bodenmodule nicht in den Längsträgern angeordnet sind;
- Fig. 5: einen Querschnitt durch einen der beiden Längsträger aus Fig. 1;
- Fig. 6: einen Querschnitt durch den Bereich der beiden Bodenmodule aus Fig. 1, in dem sich diese überlappen;
- Fig. 7: eine schematisch dargestellte Presse zur Herstellung von Bodenmodulen;
- Fig. 8: eine Draufsicht auf den Presstisch der Presse aus Fig. 7;
- Fig. 9: einen Schnitt durch ein erfindungsgemäß hergestelltes Bodenmodul mit einem Insert;
- Fig. 10: einen Schnitt durch das Bodenmodul aus Fig. 9, wobei in das Insert ein Gehäuse mit einer Transportkugel eingerastet ist;
- Fig. 11: eine Detailansicht des Inserts aus Fig. 9;
- Fig. 12: das Insert aus Fig. 11 in einer Explosionsdarstellung;
- Fig. 13: eine erste Variante eines Bodenmoduls;
- Fig. 14: eine zweite Variante eines Bodenmoduls;
- Fig. 15: einen schematischen Schnitt durch den Randbereich eines Bodenmoduls;
- Fig. 16: einen schematischen Schnitt durch den Frachtraum eines Flugzeugs;
- Fig. 17: eine dritte Variante eines Bodenmoduls mit Drainagewanne;
- Fig. 18: eine Seitenansicht der dritten Variante gemäß Fig. 17;
- Fig. 19: eine Explosionszeichnung der Drainagewanne aus Fig. 18.

In der nachfolgenden Beschreibung werden für gleiche und gleichwirkende Teile dieselben Bezugsziffern verwendet.

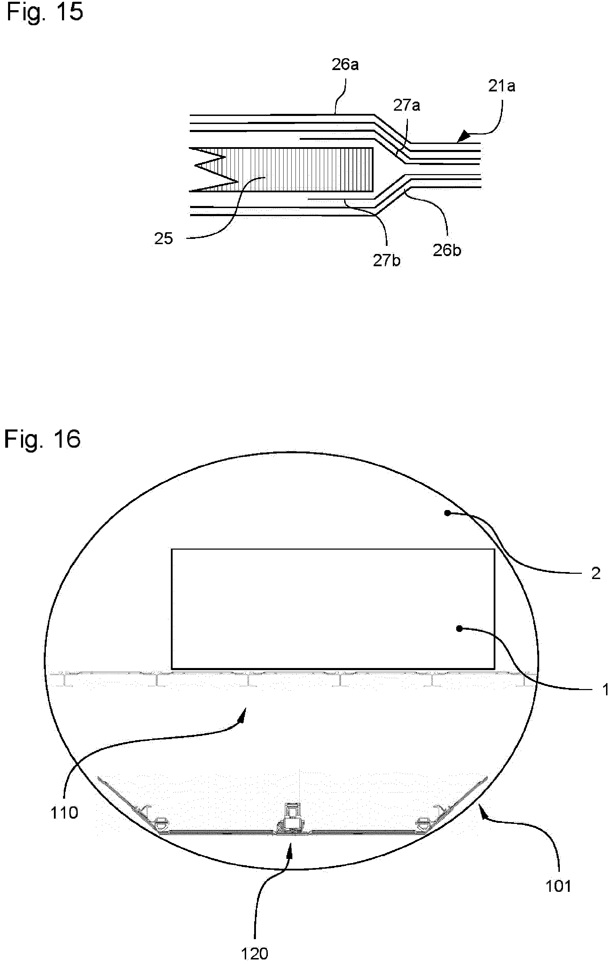

Die Fig. 16 zeigt einen schematischen Schnitt durch den Rumpf eines Flugzeugs. Anhand des Schnitts lässt es sich erkennen, dass Frachtflugzeuge üblicherweise zwei sich unterscheidende Frachtdecks, nämlich ein oberes Frachtdeck 110 sowie ein unteres Frachtdeck 120, aufweisen. In der Fig. 16 ist auf dem oberen Frachtdeck 110 innerhalb des Frachtraums 2 schematisch ein Container 1 angeordnet. Die Außenhaut 101 bildet die Begrenzung des Frachtraums 2.

Die Bodenmodule 20' können als Flächenmodule sowohl für das obere Frachtdeck 110 sowie für das untere Frachtdeck 120 eingesetzt werden.

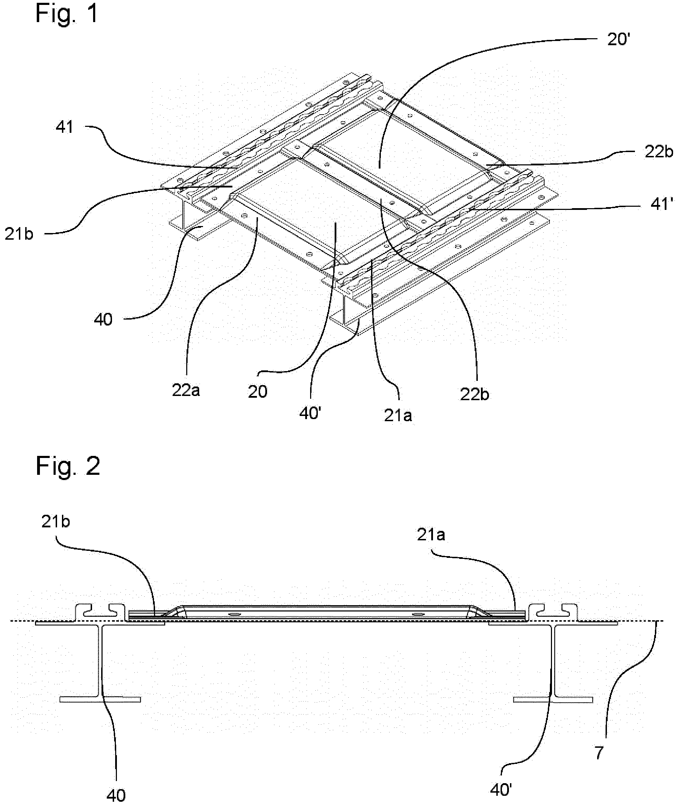

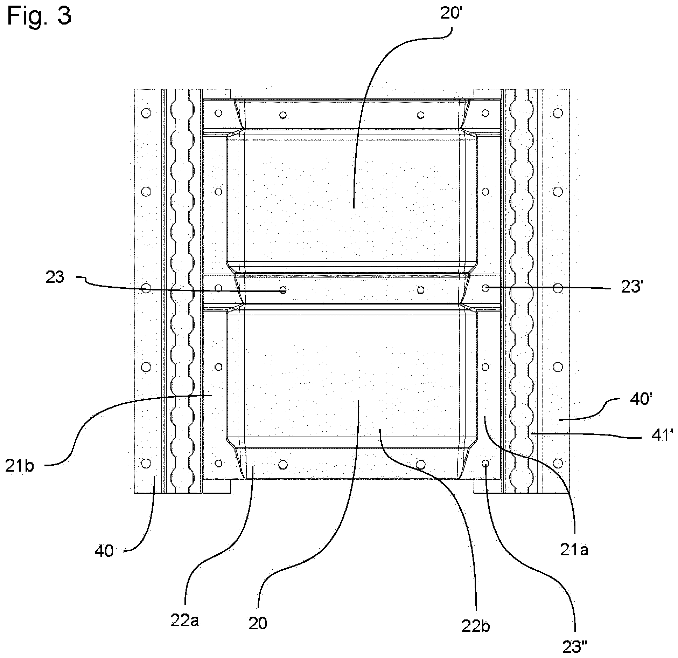

Fig. 1 zeigt schematisch Bodenmodule 20, 20', wie sie in das obere Frachtdeck 110 eingebaut werden können. Die Darstellungen in den Fig. 1 bis 6 sind stark schematisiert, um das Funktionsprinzip der Bodenmodule 20, 20' zu erläutern. Die Proportionen der einzelnen Elemente stimmen nicht zwangsweise überein.

In der Fig. 1 liegen die beiden Bodenmodule 20, 20' auf einem ersten Längsträger 40 und einem zweiten Längsträger 40' auf. Die Längsträger 40, 40' haben im Wesentlichen das Profil eines Doppel-T-Trägers. An der Oberseite der beiden Längsträger 40, 40' ist mittig jeweils eine sich ebenfalls in Längsrichtung erstreckende Lochschiene 41 bzw. 41' angebracht. Die Lochschiene kann integraler Bestandteil des jeweiligen Längsträgers 40 bzw. 40' sein. Alternativ wird die Lochschiene 41, 41' auf den jeweiligen Längsträger 40, 40' aufgeschraubt. Die Bodenmodule, genauer gesagt, die linken und rechten Randabschnitte 21a, 21b der beiden Bodenmodule 20, 20', liegen zwischen den Erhöhungen, die die Lochschienen 41, 41' ausbilden. Die Bodenmodule 20, 20' sind in einer Reihe hintereinander angeordnet. Das vordere Bodenmodul 20 liegt also vor dem hinteren Bodenmodul 20'. Insgesamt kann so ein geschlossenes und begehbares Frachtdeck ausgebildet werden.

An der Vorderseite des vorderen Bodenmoduls 20 befindet sich ein vorderer Randabschnitt 22a und an der hinteren Seite des vorderen Bodenmoduls 20 ein hinterer Randabschnitt 22b. Entsprechende Randabschnitte 22a, 22b sind auch an dem hinteren Bodenmodul 20' vorgesehen. Bereits anhand der Fig. 1 ist es ersichtlich, dass sich das vordere und das hintere Bodenmodul 20, 20' in dem hinteren Randabschnitt 22a des vorderen Bodenmoduls 20 bzw. in dem vorderen Randabschnitt 22a des hinteren Bodenmoduls 20' überlappen.

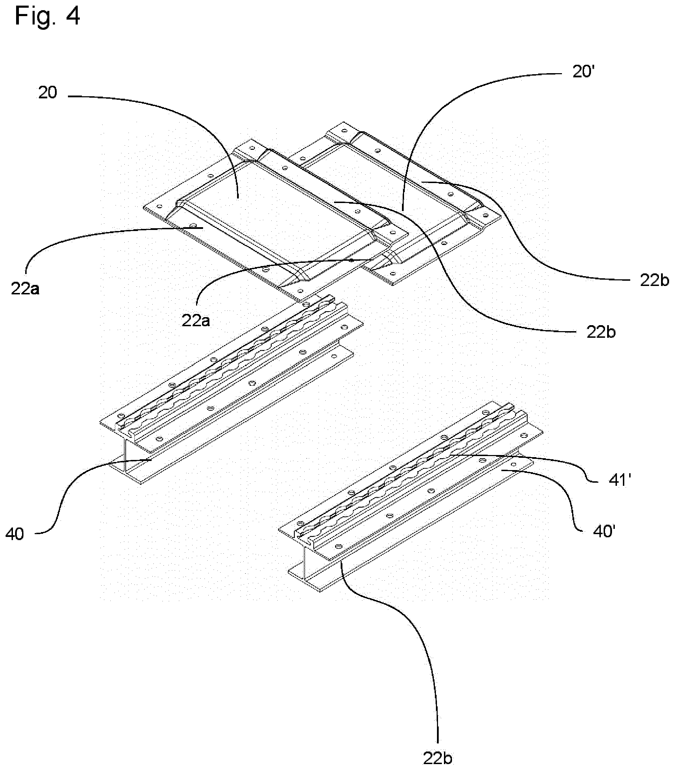

Die überlappenden vorderen und hinteren Randabschnitte 22a, 22b der beiden Bodenmodule 20, 20' sind in Fig. 4 bezeichnet.

Sowohl anhand der Fig. 1 sowie anhand der Fig. 2 und 4 ist es ersichtlich, dass die vorderen Randabschnitte 22a der beiden Bodenmodule 20, 20' eine Oberseite aufweisen, die nach unten hin - auf eine Auflageebene 7 der Bodenmodule 20, 20' zu - geneigt sind. Korrespondierend hierzu sind die hinteren Randabschnitte 22b der Bodenmodule 20, 20' nach oben geneigt, so dass, wie in der Fig. 1 gezeigt, eine passgenaue Verbindung zwischen den Bodenmodulen 20, 20' hergestellt werden kann. Die Auflageebene kann durch die Randabschnitte 21a, 21b definiert werden, die auf den Längsträgern 40, 40' aufliegen.

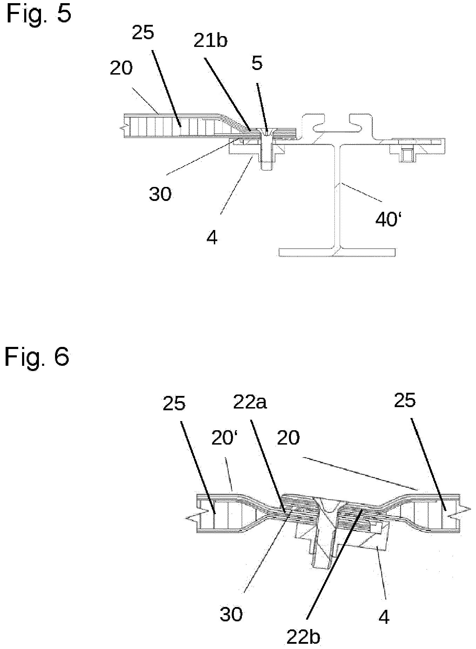

Die Fig. 6 zeigt einen Schnitt durch diesen überlappenden Bereich, wobei hier an dem vorderen Randabschnitt 22a des hinteren Bodenmoduls 20' eine Clip-Nut 4 vorgesehen ist, in die eine Schraube eingreift, die das vordere und das hintere Bodenmodul 20, 20', insbesondere den jeweiligen vorderen und hinteren Randabschnitt 22a, 22b, miteinander verbindet. Zwischen diesen Randabschnitten 22a, 22b befindet sich ein Dichtband 30, das die Verbindung abdichtet.

Die Bodenmodule 20, 20' sind im beschriebenen Ausführungsbeispiel rechteckig ausgebildet und weisen eine Vielzahl von Bohrungen 23, 23', 23" auf, die sowohl im linken wie im rechten Randabschnitt 21a, 21b sowie im vorderen wie im hinteren Randabschnitt 22a, 22b vorgesehen sind. Erfindungsgemäß können aber auch Bodenmodule 20, 20' mit speziell auf die Anforderungen des jeweiligen Flugzeugs abgestimmten Abmessungen hergestellt werden. Beispielsweise können beliebige im Wesentlichen viereckige oder dreieckige Flächen hergestellt werden, die besonders für die Abdeckung des Frachtdecks im enger werdenden Heckbereich vorteilhaft sind.

Die Bohrungen 23, 23' im linken und rechten Randabschnitt 21a, 21b ermöglichen ein Verschrauben der Bodenmodule 20, 20' mit dem Längsträger 40' bzw. 40. Die Bohrungen 23 im vorderen und hinteren Randabschnitt 22a, 22b gewährleisten das bereits erläuterte Verschrauben der Bodenmodule 20, 20' miteinander. Insgesamt ergibt sich so eine durchgehende Kette bzw. Reihe von Bodenmodulen, die das gesamte obere Frachtdeck 120 in Längsrichtung des Flugzeugs überspannt.

Fig. 5 zeigt einen Schnitt durch den Längsträger 40', wobei das Bodenmodul 20 mit diesem über eine Schraube 5 verschraubt ist. Auch in der Fig. 5 ist ein Dichtband 30 ersichtlich, das eine Dichtfunktion zwischen dem Bodenmodul 20 und dem Längsträger 40' übernimmt. Insgesamt kann mit den Dichtbändern 30, wie diese in den Fig. 5 und 6 gezeigt sind, das Frachtdeck derart abgedeckt werden, dass dieses wasserdicht und gegebenenfalls gasundurchlässig ist.

Anhand der Fig. 5, 6 und 15 ist es ersichtlich, dass die Bodenmodule 20, 20' als Faserverbundwerkstoffe hergestellt sind. Sie umfassen jeweils mittig einen Strukturkern 25, beispielsweise einen Wabenkern oder Schaum, der von Faserlagen, die die Deckschichten 26a, 26b bilden, umgeben ist. In den Randbereichen, beispielsweise in dem in Fig. 5 gezeigten rechten Randabschnitt 21b oder in den in Fig. 6 gezeigten vorderen und hinteren Randabschnitten 22a, 22b sind zusätzliche Faserlagen eingelegt. Diese sind in der Fig. 15 als Zusatzlagen 27a, 27b bezeichnet. Diese zusätzlichen Lagen führen dazu, dass die Bodenmodule 20, 20' in den Randbereichen eine erhöhte Festigkeit und Steifigkeit aufweisen, so dass die Randbereiche die bereits erläuterte Auflagefunktion (vergleiche hierzu auch Fig. 5) wahrnehmen können.

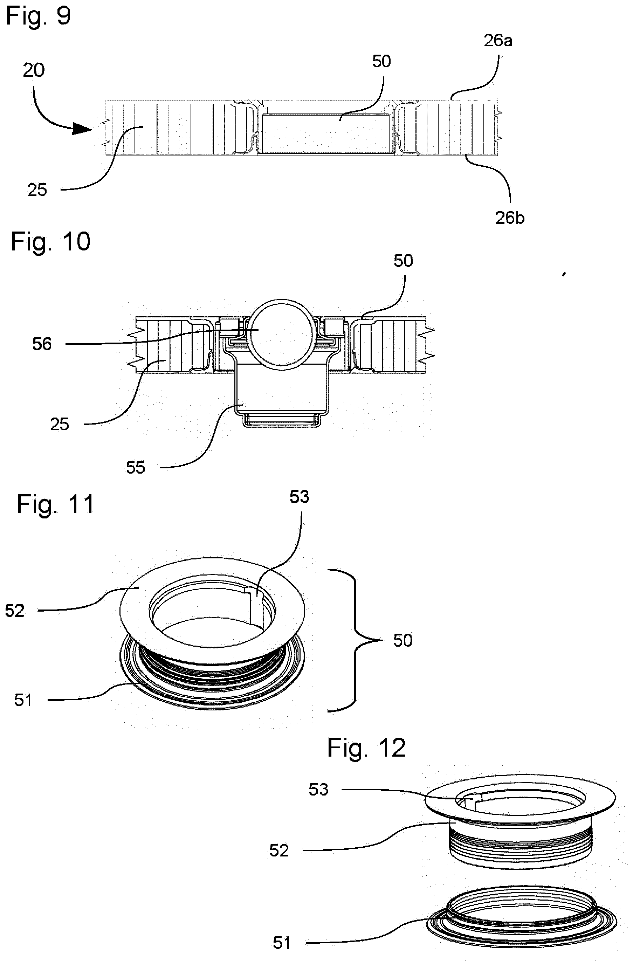

Erfindungsgemäß können die Bodenmodule 20, 20' auch mit integrierten Funktionseinheiten, beispielsweise einer Transportkugel 56 (vergleiche Fig. 10) ausgestattet werden. Die Fig. 9 bis 12 erläutern dies näher. Das Ausführungsbeispiel gemäß den Fig. 1 bis 4 weist keine entsprechenden Funktionseinheiten auf.

So werden in den Bodenmodulen 20, 20', insbesondere in dem Bereich, in dem eigentlich der flächige Strukturkern 25 vorgesehen ist, Aussparungen angebracht werden, in die Inserts 50 integriert sind (vergleiche Fig. 9).

Die Inserts können dazu dienen, ein Gehäuse einer Transportkugel 56 zu halten (vergleiche Fig. 10). Erfindungsgemäß können die Inserts auch andere Funktionen wahrnehmen.

In einem Ausführungsbeispiel hat das Insert 50 eine Hinterschneidung 53 (vgl. Fig. 10 und 11), in die eine Raste des Gehäuses 55 einrastet, so dass die Transportkugel 56 sicher gehalten wird. Das Insert 50 kann, wie anhand der Fig. 12 ersichtlich, zweiteilig aus einem unteren Rahmenteil 51 und einem oberen Rahmenteil 52 hergestellt werden, die ineinandergreifen.

Ein entsprechendes Insert ist für den erfindungsgemäßen Herstellungsprozess der Bodenmodule 20, 20' besonders vorteilhaft.

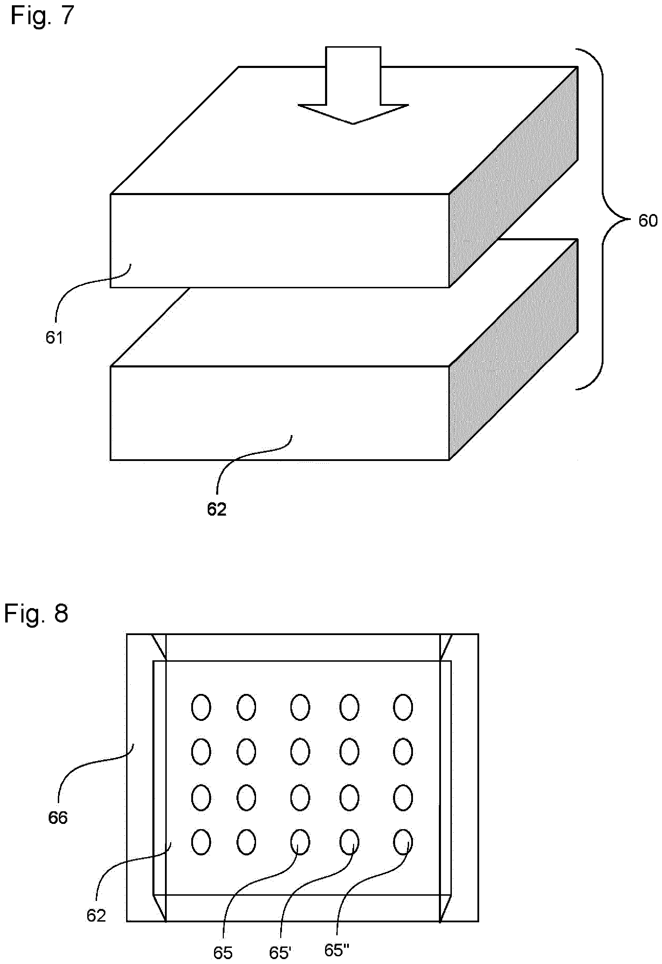

Eine entsprechende Herstellung erfolgt vorzugsweise in einer Presse 60, wie dies exemplarisch in Fig. 7 gezeigt ist. Die Presse 60 kann also einen Presstisch 62 und einen Pressstempel 61 umfassen, wobei der Pressstempel 61 mit Druck beaufschlagt auf den Presstisch 62 gedrückt werden kann. Zur erfindungsgemäßen Herstellung der Bodenmodule 20, 20' werden die Faserlagen, die die Deckschichten 26a, 26b bilden, sowie der Strukturkern 25 in die Presse 60 eingelegt, erhitzt und miteinander verpresst.

In einem Ausführungsbeispiel des Herstellungsverfahrens umfasst der Presstisch (bzw. die Pressform) 62 neben einem Rahmen 66 zur Herstellung der geneigten vorderen und hinteren Randabschnitte 22a, 22b Positionierungselemente 65, 65', 65", die über den Presstisch verteilt angeordnet sind. Zur erfindungsgemäßen Herstellung eines Bodenmoduls werden diese Positionierungselemente 65, 65', 65" mit oberen Rahmenteilen 52, wie diese in der Fig. 12 gezeigt sind, bestückt. Danach folgen Faserlagen, die vorzugsweise Aussparungen in den Bereichen der Positionierungselemente 65, 65', 65" haben. Auf die Faserlagen, die später die obere Deckschicht 26a bilden, wird ein ebenfalls mit entsprechenden Aussparungen versehener Strukturkern 25 gelegt. Auf den Strukturkern 25 kommen weitere Faserlagen zur Herstellung der unteren Deckschicht 26b. Abschließend werden die unteren Rahmenteile 51 eingebracht. Nach dem Erhitzen und Erwärmen dieses Lagenaufbaus ergibt sich ein Faserverbundwerkstoff mit Inserts 50, wie dies exemplarisch in der Fig. 9 gezeigt ist.

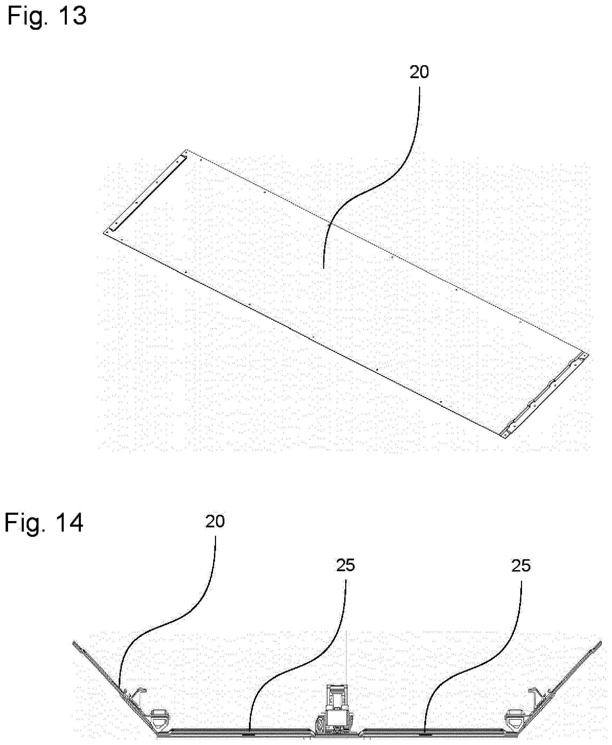

Es sind zahlreiche Varianten denkbar. So können, wie anhand der Fig. 13 ersichtlich, deutlich größere Bodenmodule 20 hergestellt werden. Auch ist es, wie anhand der Fig. 14 ersichtlich, möglich, mit einer geeigneten Presse ein Bodenmodul herzustellen, das geneigte Flügelabschnitte hat. Entsprechende Bodenmodule 20 sind besonders im unteren Frachtdeck 120 von Vorteil.

Die erfindungsgemäß hergestellten Bodenmodule 20, 20' können mit einem oder mehreren Strukturkernen 25 ausgestattet sein. Zwischen den Strukturkernen 25 können, wie aus der Fig. 16 ersichtlich, kernfreie Bereiche, z.B. mit erhöhter Lagenzahl, zur Befestigung der Bodenmodule 20, 20' an Strukturelementen des Flugzeugs und/oder zur Aufnahme von Funktionseinheiten, z.B. Rollenbahnen oder PDUs, vorgesehen sein.

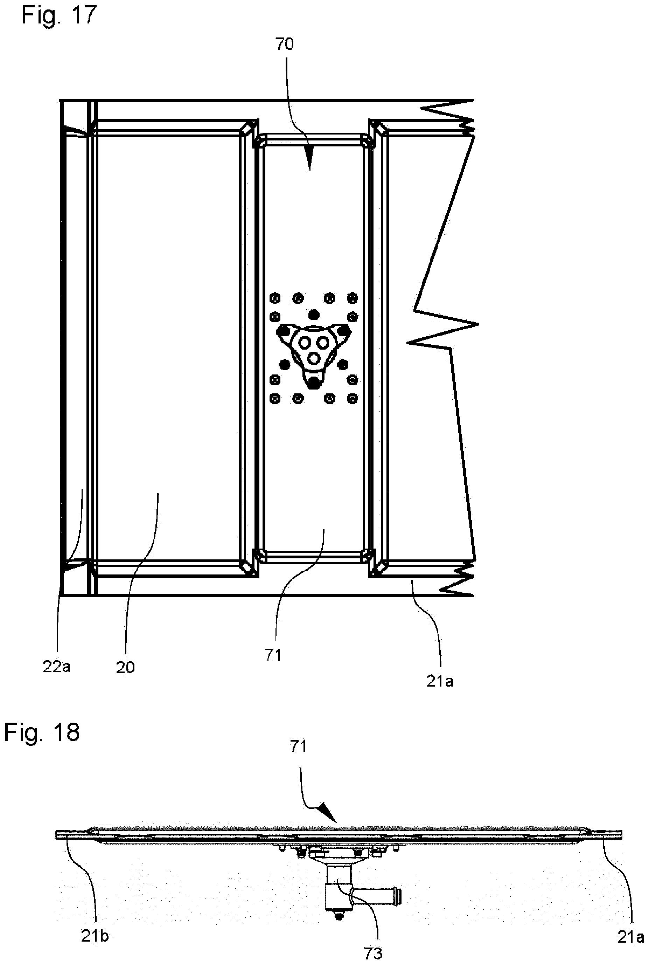

Die Fig. 17 zeigt eine weitere Variante eines Bodenmoduls 20. Dieses hat ähnlich wie die vorab beschriebenen Bodenmodule 20, 20' vordere und hintere geneigte Randabschnitte 22a, 22b. Ebenso sind linke und rechte Randabschnitte 21a, 21b vorgesehen. Insgesamt hat das Bodenmodul 20 gemäß der Fig. 17 eine rechtwinklige Form, wobei sich insgesamt eine längliche begehbare Oberfläche ergibt, die durch eine Drainagewanne 71 unterteilt ist. Die Drainagewanne 71 ist Teil eines Drainagesystems 70 zum Abführen von Flüssigkeiten. Die Drainagewanne 71 hat in der in Fig. 17 gezeigten Draufsicht eine im Wesentlichen rechtwinklige Abmessung und erstreckt sich beinahe über die gesamte Breite des Bodenmoduls 20, wobei die Randabschnitte 21a, 21b ausgenommen sind.

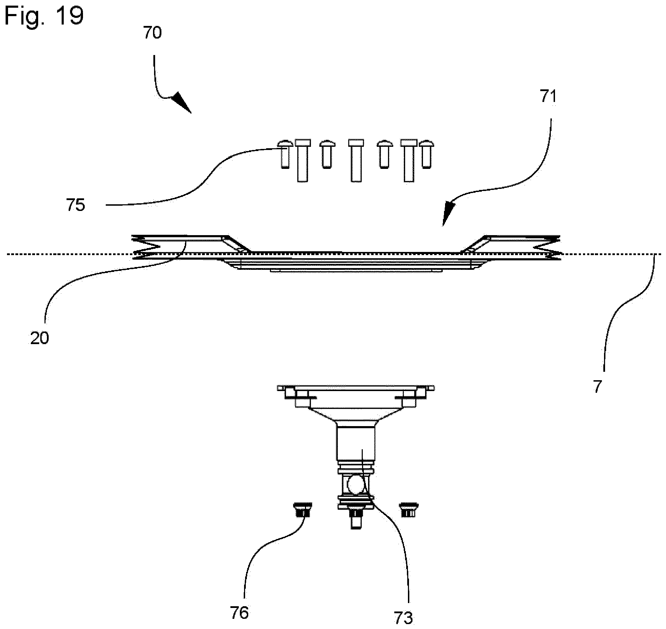

Mittig in der Drainagewanne 71 befindet sich eine Öffnung an deren Unterseite ein Abführstutzen 73 (vgl. Fig. 18 und 19) angebracht ist. Der Abführstutzen 73 ist mit einem Entwässerungssystem verbunden und gewährleistet, dass das Frachtdeck trotz der Entwässerungsfunktion weder Gase noch Flüssigkeiten in die Bilge einlässt. Die Drainagewanne 71 fällt zur Öffnung hin ab, so dass eine effiziente Entwässerung gewährleistet werden kann.

In einem Ausführungsbeispiel ist ein Sieb vorgesehen, um ein Verstopfen des Entwässerungssystems zu verhindern. In dem in den Fig. 17-19 gezeigten Ausführungsbeispiel ist der Abführstützen 73 mittels Drainageschrauben 75 und Drainagemuttern 76 an der Drainagewanne 71 des Bodenmoduls 20 angebracht. Theoretisch können weitere versteifende Flächenelemente an der Oberseite des Bodenmoduls 20 vorgesehen sein, um eine sichere Befestigung des Abführstutzens 73 zu gewährleisten.

Die Drainagewanne 71 kann als Teil des erfindungsgemäßen Herstellungsverfahrens derart ausgebildet werden, dass sich diese in einen Bereich unterhalb der Auflageebene 7 erstreckt. Die tiefste Stelle der Drainagewanne 71 kann von dieser Auflageebene 7 ca. mindestens 1,5 oder 2,5 cm beabstandet sein. In einem Ausführungsbeispiel wird die Drainagewanne 71 in einem kernfreien Bereich hergestellt, wobei je nach Anwendung eine erhöhte Anzahl von Faserlagen, beispielsweise Kohlenstofffaserlagen, vorgesehen ist. Die Struktur der Drainagewanne 71 kann mit einem geeigneten Werkzeug beim Pressen des Bodenmoduls 20 erzeugt werden. In diesem Pressschritt kann ein gleichzeitiges Aushärten des Faserverbundwerkstoffs erfolgen.

### Bezuaszeichenliste

- 1: Container
- 2: Frachtraum
- 4: Clip-Nut
- 5: Schraube
- 7: Auflageebene
- 20, 20': Bodenmodul
- 21a, 21b: linker und rechter Randabschnitt
- 22a, 22b: vorderer und hinterer Randabschnitt
- 23, 23', 23": Bohrungen
- 25: Strukturkern
- 26a, 26b: Deckschicht
- 27a, 27b: Zusatzlagen
- 30: Dichtband
- 40, 40': Längsträger
- 41, 41': Lochschiene
- 50: Insert
- 51: unteres Rahmenteil
- 52: oberes Rahmenteil
- 53: Hinterschneidung
- 55: Gehäuse
- 56: Transportkugel
- 60: Presse
- 61: Pressstempel
- 62: Presstisch
- 65, 65', 65": Positionierungselemente
- 66: Rahmen
- 70: Drainagesystem
- 71: Drainagewanne
- 73: Abführstutzen
- 75: Drainageschrauben
- 76: Drainagemuttern
- 101: Außenhaut
- 110: Oberes Frachtdeck
- 120: unteres Frachtdeck

## Patentansprüche

1. Verfahren zur Herstellung eines Bodenmoduls (20, 20') für ein Frachtdeck eines Flugzeugs, umfassend die Schritte:
a) Ausschneiden von Aussparungen aus einem Kern (25), wobei es sich bei dem Kern um einen Schaumstoff- und/oder einen Strukturkern handelt;
b) Anordnen des Kerns (25) zwischen ersten Faserlagen und zweiten Faserlagen, wobei die Faserlagen Kohlenstoff- und/oder Aramid- und/oder Glasfasern umfassen derart, dass die Faserlagen den Kern an den Seiten zur Bildung eines Randbereichs überragen;
c) Anordnen von Rahmenteilen (51, 52) in den Aussparungen zur Herstellung von Inserts (50), vorzugsweise zur Aufnahme von Transportkugeln (56);
d) Aushärten, vorzugsweise unter Druck, eines aufgebrachten Kunstharzes derart, dass die Faserlagen und die Rahmenteile (51, 52) mit dem Kern (25) verklebt sind.

2. Verfahren nach Anspruch 1,
**gekennzeichnet durch**
ein Ausschneiden von zu den Aussparungen in der Kernschicht korrespondierenden Aussparungen in zumindest einigen der Faserlagen.

3. Verfahren nach einem der Ansprüche 1 oder 2,
**dadurch gekennzeichnet, dass**
zumindest die Schritte b) bis d) in einer Presse (60) mit einem Presstisch (62) und einem Pressbären (61) durchgeführt werden.

4. Verfahren nach Anspruch 3,
**dadurch gekennzeichnet, dass**
die Presse (60), insbesondere der Presstisch (62), Positionierungshilfen (65, 65', 65") umfasst, wobei mindestens einige der Rahmenteile (51, 52) auf den Positionierungshilfen (65, 65', 65") oder diese umgebend angeordnet werden.

5. Verfahren nach einem der Ansprüche 1 bis 4,
**dadurch gekennzeichnet, dass**
das Herstellen der Inserts (50) ein Einstecken von ersten Rahmenteilen (51) an einer ersten Seite des Kerns (25) und ein Einstecken von zweiten Rahmenteilen (52) an einer zweiten Seite des Kerns (25) umfasst, wobei jeweils ein erstes Rahmenteil (51) und ein zweites Rahmenteil (52), vorzugsweise unter Herstellung einer Rastverbindung, ineinander eingreifen.

6. Verfahren nach einem der Ansprüche 1 bis 5,
**gekennzeichnet durch**:
ein Einbringen von zusätzlichen Faserlagen (27a, 27b) vor dem Schritt d) derart, dass in Teilbereichen des Bodenmoduls (20, 20') eine lokale Erhöhung der Lagenzahl vorliegt, um so Auflage- und/oder Befestigungsbereiche und/oder mindestens eine Drainagewanne (71) herzustellen.

7. Verfahren nach Anspruch 6,
**dadurch gekennzeichnet, dass**
in zumindest einigen Teilbereichen des Bodenmoduls (20, 20') Aussparungen im Kern (25) vorgesehen werden,
wobei mittels eines entsprechend ausgestalteten Werkzeugs derart Druck auf die Teilbereiche ausgeübt wird, dass die ersten und zweiten Faserlagen miteinander verklebt werden.

8. Verfahren nach einem der Ansprüche 1 bis 7,
**dadurch gekennzeichnet, dass**
die Randbereiche zumindest teilweise derart ausgehärtet werden, dass zumindest Abschnitte der Randbereiche gegenüber einer Auflageebene (7) des Bodenmoduls, insbesondere spitzwinkelig, geneigt sind.

9. Verfahren nach einem der Ansprüche 1 bis 8,
**gekennzeichnet durch**
ein Einbringen, insbesondere Einrasten, mindestens eines Gehäuses (55) mit einer Transportkugel (56) in mindestens eines der Inserts (50).

10. Verfahren nach einem der Ansprüche 1 bis 9,
**gekennzeichnet durch**
ein Aufkleben mindestens eines Dichtbands (30) auf mindestens einen Abschnitt des Randbereichs.

11. Verfahren nach einem der Ansprüche 6 oder 7,
**gekennzeichnet durch**
ein Einschrauben eines Fixierpunktes in einen der faserverstärkten Teilbereiche.

## Claims

1. A method for manufacturing a floor module (20, 20') for a cargo deck of an aircraft, comprising the steps of:
a) cutting out recesses from a core (25), wherein the core is a foam core and/or a structural core;
b) arranging the core (25) between first fiber layers and second fiber layers, wherein the fiber layers comprise carbon and/or aramid and/or glass fibers such that the fiber layers protrude beyond the core at the sides to form an edge region;
c) arranging frame parts (51, 52) in the recesses for producing inserts (50), preferably for receiving transport balls (56);
d) curing, preferably under pressure, an applied synthetic resin in such a way that the fiber layers and the frame parts (51, 52) are bonded to the core (25).

2. The method according to claim 1,
**characterized by**
cutting out recesses corresponding to the recesses in the core layer in at least some of the fiber layers.

3. The method according to one of claims 1 or 2,
**characterized in that**
at least the steps b) to d) are carried out in a press (60) having a press table (62) and a press ram (61).

4. The method according claim 3,
**characterized in that**
the press (60), in particular the press table (62), comprises positioning aids (65, 65', 65"), wherein at least some of the frame parts (51, 52) are arranged on the positioning aids (65, 65', 65") or surrounding them.

5. The method according to one of claims 1 to 4,
**characterized in that**
the production of the inserts (50) comprises an insertion of first frame parts (51) on a first side of the core (25) and an insertion of second frame parts (52) on a second side of the core (25), wherein a first frame part (51) and a second frame part (52) in each case engage one another, preferably by producing a latching connection.

6. The method according to one of claims 1 to 5,
**characterized by**
inserting additional fiber layers (27a, 27b) before step d) such that a local increase in the number of layers is present in partial regions of the floor module (20, 20') in order to produce support and/or fastening regions and/or at least one drainage trough (71).

7. The method according to claim 6,
**characterized in that**
recesses are provided in the core (25) in at least some partial regions of the floor module (20, 20'),
wherein pressure is exerted on the partial regions by means of an appropriately designed tool in such a way that the first and second fiber layers are bonded to one another.

8. The method according to one of claims 1 to 7,
**characterized in that**
the edge regions are at least partially cured in such a way that at least sections of the edge region are inclined relative to a support plane (7) of the floor module, in particular at an acute angle.

9. The method according to one of claims 1 to 8,
**characterized by**
an insertion, in particular latching, of at least one housing (55) with a transport ball (56) into at least one of the inserts (50).

10. The method according to one of claims 1 to 9,
**characterized by**
gluing at least one sealing strip (30) to at least one section of the edge region.

11. The method according to one of claims 6 or 7,
**characterized by**
screwing a fixing point into one of the fiber-reinforced partial regions.

## Revendications

1. Procédé pour la fabrication d'un module de plancher (20, 20') pour une soute d'un avion, comprenant les étapes suivantes :
a) découpe d'ouvertures dans un noyau (25), lequel noyau est un noyau en mousse et/ou un noyau de structure ;
b) disposition du noyau (25) entre des premières couches de fibres et des deuxièmes couches de fibres, lesquelles couches de fibres comprennent des fibres de carbone et/ou d'aramide et/ou de verre, de telle façon que les couches de fibres dépassent du noyau sur les côtés pour former une région de bord ;
c) disposition de parties de cadre (51, 52) dans les ouvertures pour produire des inserts (50), de préférence pour recevoir des billes de transport (56) ;
d) durcissement, de préférence sous pression, d'une résine synthétique appliquée, de façon à coller les couches de fibres et les parties de cadre (51, 52) au noyau (25).

2. Procédé selon la revendication 1, **caractérisé en ce que** des ouvertures correspondant aux ouvertures de la couche de noyau sont découpées dans au moins quelques-unes des couches de fibres.

3. Procédé selon l'une des revendications 1 ou 2, **caractérisé en ce que** les étapes b) à d), au moins, sont exécutées dans une presse (60) munie d'un plateau de presse (62) et d'un fouloir de presse (61).

4. Procédé selon la revendication 3, **caractérisé en ce que** la presse (60), en particulier le plateau de presse (62), comporte des aides au positionnement (65, 65', 65"), quelques-unes au moins des parties de cadre (51, 52) étant disposées sur les aides au positionnement (65, 65', 65") ou entourant celles-ci.

5. Procédé selon l'une des revendications 1 à 4, **caractérisé en ce que** la fabrication des inserts (50) comprend l'emboîtement de premières parties de cadre (51) sur un premier côté du noyau (25) et l'emboîtement de deuxièmes parties de cadre (52) sur un deuxième côté du noyau (25), chaque première partie de cadre (51) se mettant en prise dans une deuxième partie de cadre (52), de préférence en créant un assemblage enclenché.

6. Procédé selon l'une des revendications 1 à 5, **caractérisé en ce que** des couches de fibres (27a, 27b) supplémentaires sont introduites avant l'étape d), de telle manière qu'il y ait dans certaines zones du module de plancher (20, 20') une augmentation locale du nombre de couches, afin de créer des zones d'appui et/ou de fixation et/ou au moins un bac de drainage (71).

7. Procédé selon la revendication 6, **caractérisé en ce que** des ouvertures sont prévues dans le noyau (25) dans au moins quelques zones du module de plancher (20, 20'), une pression étant exercée sur ces zones au moyen d'un outil de forme correspondante afin que les premières et deuxièmes couches de fibres soient collées ensemble.

8. Procédé selon l'une des revendications 1 à 7, **caractérisé en ce que** les régions de bord sont au moins partiellement durcies de telle sorte que des sections au moins des régions de bord soient inclinées par rapport à un plan d'appui (7) du module de plancher, en particulier à angle aigu.

9. Procédé selon l'une des revendications 1 à 8, **caractérisé en ce qu'**au moins un boîtier (55) avec une bille de transport (56) est introduit, en particulier emboîté, dans au moins un des inserts (50).

10. Procédé selon l'une des revendications 1 à 9, **caractérisé en ce qu'**au moins une bande d'étanchéité (30) est collée sur au moins une partie de la région de bord.

11. Procédé selon l'une des revendications 6 ou 7, **caractérisé en ce qu'**un point de fixation est vissé dans l'une des zones renforcées avec des fibres.
